# FASCICULE DE BREVET EUROPEEN

(11) **EP 2 728 682 B1**
(45) Date de publication et mention de la délivrance du brevet: **02.09.2015**
(21) Numéro de dépôt: 13188286.2
(22) Date de dépôt: 11.10.2013
(51) Int. Cl.: H01S 3/067, H01S 3/04, H01S 3/102, H01S 3/10

(54) **Procédé de fabrication d'un laser à fibre optique**
Herstellungsverfahren eines Lasers mit Lichtleitfasern
A method for manufacturing an optical fibre laser

(30) Priorité: 22.10.2012 FR 1260035
(43) Date de publication de la demande: 07.05.2014
(73) Titulaire: Commissariat à l'Énergie Atomique et aux Énergies Alternatives, 75015 Paris (FR)
(72) Inventeur: Fourcault, William, 38000 Grenoble (FR); Charrat, Bruno, 38120 Saint-Egrève (FR); Leger, Jean-Michel, 38190 Villard-Bonnot (FR)
(74) Mandataire: Bonnet, Michel

(56) Documents cités:
- WO-A1-2009/155707
- HARUTJUNIAN Z E ET AL: "Single polarisation twisted distributed feedback fibre laser", ELECTRONICS LETTERS, IEE STEVENAGE, GB, vol. 32, no. 4, 15 février 1996 (1996-02-15), pages 346-348, XP006004717, ISSN: 0013-5194, DOI: 10.1049/EL:19960207
- ERLEND RONNEKLEIV ET AL: "Modeling of Polarization-Mode Competition in Fiber DFB Lasers", IEEE JOURNAL OF QUANTUM ELECTRONICS, IEEE SERVICE CENTER, PISCATAWAY, NJ, USA, vol. 34, no. 9, 1 septembre 1998 (1998-09-01), XP011052024, ISSN: 0018-9197
- H. Y. KIM ET AL: "Polarization properties of a twisted fiber laser", OPTICS LETTERS, vol. 20, no. 4, 15 février 1995 (1995-02-15), pages 386-386, XP055055775, ISSN: 0146-9592, DOI: 10.1364/OL.20.000386

## Description

La présente invention concerne un procédé de fabrication d'un laser à fibre optique, et un laser à fibre optique.

L'invention s'applique plus particulièrement, mais pas exclusivement, au domaine des lasers à rétroaction distribuée (de l'anglais « Distributed Feedback Laser », abrégé en DFL) ou bien des lasers à réflecteur de Bragg distribué (de l'anglais « Distributed Bragg Reflector », abrégé DBR), destinés à fonctionner à pression ambiante ou bien sous vide, comme c'est le cas par exemple pour les applications spatiales.

Certains lasers à fibre optique connus présentent parfois un comportement instable caractérisé par un changement au cours du temps de la direction de polarisation du faisceau lumineux en sortie du laser.

Il peut ainsi être souhaité de chercher à résoudre ce problème d'instabilité.

A cet effet, l'invention a pour objet un procédé de fabrication d'un laser à fibre optique comportant une fibre optique présentant deux extrémités dont une première par laquelle de la lumière est destinée à être reçue, et un tronçon dopé destiné à absorber au moins une partie de la lumière reçue par la première extrémité et à émettre de la lumière, le procédé comportant :
- l'application d'un angle de torsion à la fibre optique,
- la fourniture de lumière présentant une puissance appelée puissance de pompe à la première extrémité de la fibre optique,
- la vérification que le Rapport d'Extinction de Polarisation de la lumière sortant de la première extrémité de la fibre optique reste supérieur à une valeur prédéterminée sur tout un intervalle prédéterminé de la puissance de pompe, et
- si le Rapport d'Extinction de Polarisation reste supérieur à la valeur prédéterminée sur tout l'intervalle prédéterminé de la puissance de pompe, la fixation de la fibre optique au support mécanique en deux points de fixation de la fibre optique situés de part et d'autre du tronçon dopé, avec l'angle de torsion appliqué à la fibre optique.

Les inventeurs ont en effet trouvé que ce problème d'instabilité provenait du procédé de fabrication du laser à fibre optique. En effet, dans le procédé de fabrication habituel, un point de fonctionnement déterminé principalement par l'angle de torsion est recherché en accord avec un cahier des charges fixé et la fibre optique est collée dans cette position. Or, les inventeurs ont déterminé que la moindre modification de la puissance de pompe pouvait entraîner le décalage du point de fonctionnement, et donc l'instabilité décrite précédemment.

Grâce au procédé de l'invention, il est vérifié que la sortie de la fibre optique reste bien polarisée sur toute une plage de puissance de pompe, et non pour une seule valeur. Ainsi, lorsque le laser à fibre optique est utilisé avec une puissance de pompe nominale comprise dans la plage précédente, la polarisation en sortie du laser reste stable même en cas de fluctuation de la puissance de pompe autour de sa valeur nominale.

De manière optionnelle, l'intervalle prédéterminé de la puissance de pompe est parcouru par paliers.

De manière optionnelle, la lumière est fournie à la première extrémité de la fibre optique par une diode.

De manière optionnelle, la diode est alimentée en courant électrique, appelé courant de pompe, et l'intervalle prédéterminé de la puissance de pompe est parcouru par paliers en faisant parcourir par paliers un intervalle prédéterminé au courant de pompe, les paliers étant séparés les uns des autres d'au plus 10 mA, de préférence d'au plus 8 mA.

De manière optionnelle, le passage d'un palier au suivant est réalisé à une vitesse d'au plus 10 mA/s, et de préférence d'au plus 5 mA/s.

De manière optionnelle, l'angle de torsion est celui pour lequel le Rapport d'Extinction de Polarisation est le plus élevé.

De manière optionnelle, le procédé comporte en outre, pour chacun de plusieurs angles de torsion, appelés angles de torsion secondaires, appartenant à un intervalle angulaire prédéterminé défini à partir de l'angle de torsion et comportant l'angle de torsion : l'application de l'angle de torsion secondaire à la fibre optique ; et la vérification que le Rapport d'Extinction de Polarisation reste supérieur à la valeur prédéterminée sur l'intervalle prédéterminé de la puissance de pompe.

De manière optionnelle, l'intervalle angulaire prédéterminé est de ±90° autour de l'angle de torsion.

L'invention a également pour objet un laser à fibre optique obtenu par un procédé selon l'invention, comportant en outre un matériau conducteur thermique enrobant au moins le tronçon dopé de la fibre optique.

En effet, le laser à fibre optique décrit dans la publication n° US 2002/0181908 A1 comporte une fibre optique présentant deux extrémités dont une première par laquelle de la lumière est destinée à être reçue, et un tronçon dopé destiné à absorber au moins une partie de la lumière reçue par la première extrémité et à émettre de la lumière. La lumière provient d'une diode, appelée diode de pompe.

Les inventeurs ont remarqué que, sous certaines conditions, un tel laser à fibre optique pouvait présenter un comportement instable caractérisé par une chute de puissance optique en sortie du laser et une forte augmentation de la longueur d'onde du faisceau lumineux en sortie du laser.

Les inventeurs ont trouvé que ce problème d'instabilité provenait de l'échauffement de la fibre optique au niveau du tronçon dopé. Cet échauffement se produit lorsque le laser à fibre optique est utilisé dans l'air à pression atmosphérique, mais avec une importance limitée car la chaleur produite au sein de la fibre optique est dissipée en premier lieu par conduction, en second lieu par convection dans l'air, et, dans une moindre mesure, par rayonnement. Cependant, lorsque le laser à fibre optique est utilisé dans le vide, seule la dissipation par rayonnement et la conduction le long de la fibre optique sont possibles, ce qui peut être insuffisant dès lors que la puissance lumineuse fournie par la diode, appelée puissance de pompe, est élevée, par exemple supérieure à quelques dizaines de milliwatts, et que la longueur du tronçon dopé de la fibre optique ne dépasse pas quelques centimètres, suivant les performances souhaitées du laser.

Au contraire, dans un laser à fibre optique selon l'invention, le matériau conducteur thermique permet une dissipation de la chaleur produite dans la fibre optique, ce qui rend le comportement du laser à fibre optique plus stable.

De manière optionnelle, au moins une partie de la lumière émise par le tronçon dopé de la fibre optique est destinée à sortir par la première extrémité de la fibre optique, et le laser à fibre optique comporte en outre : une diode destinée à émettre de la lumière à destination de la première extrémité de la fibre optique ; et un multiplexeur optique comportant une entrée par laquelle le multiplexeur optique est destiné à recevoir la lumière émise par la diode, une entrée/sortie destinée à transmettre la lumière en provenance de la diode vers la première extrémité de la fibre optique, et à recevoir la lumière sortant de la première extrémité de la fibre optique, et une sortie destinée à transmettre la lumière reçue par l'entrée/sortie du multiplexeur optique en provenance de la première extrémité de la fibre optique..

L'invention sera mieux comprise à l'aide de la description qui va suivre, donnée uniquement à titre d'exemple et faite en se référant aux dessins annexés dans lesquels :
- la figure 1 représente schématiquement la structure générale d'un laser à fibre optique selon un mode de réalisation de l'invention,
- la figure 2 illustre les étapes successives d'un procédé de fabrication du laser à fibre optique de la figure 1 selon un mode de réalisation de l'invention.

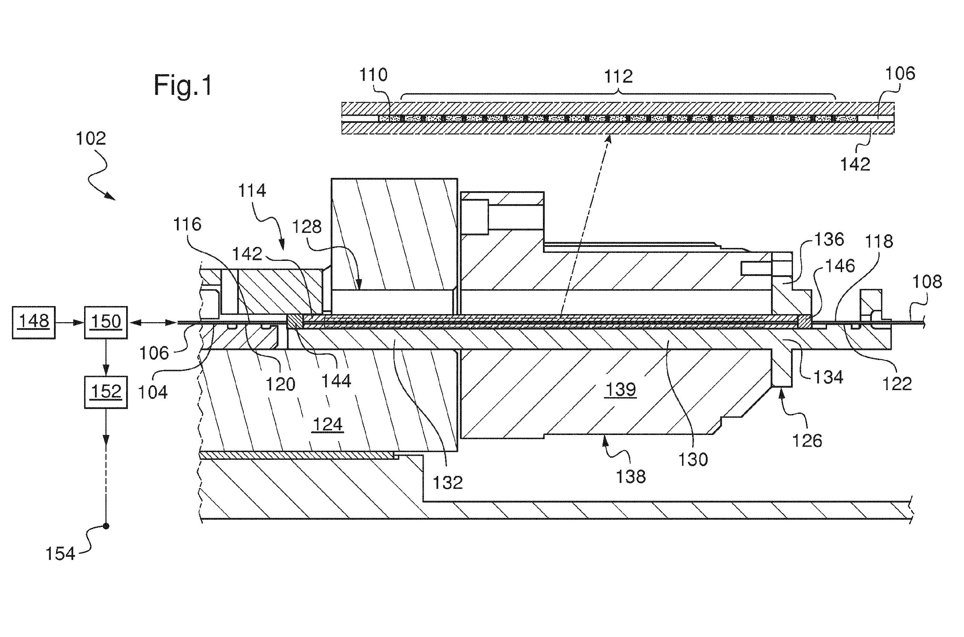

En référence à la figure 1, un laser à fibre optique 102 mettant en oeuvre l'invention va à présent être décrit. Dans l'exemple décrit, le laser 102 est un laser monomode longitudinal.

Le laser 102 comporte tout d'abord une fibre optique 104. La fibre optique 104 présente, comme cela est connu en soi, un coeur (« core » en anglais) et une gaine optique (« cladding » en anglais) entourant le coeur, l'indice de réfraction de la gaine optique étant plus faible que celui du coeur. Le coeur et la gaine optique sont entourés d'une enveloppe protectrice. La fibre optique 104 est munie de deux extrémités 106, 108, dont une première 106 est destinée au passage de lumière dans les deux sens de propagation : vers et depuis la fibre optique 104. La fibre optique 104 présente, entre ses deux extrémités 106, 108, un tronçon dopé 110 destiné, comme cela est connu en soi, à absorber au moins une partie de la lumière reçue par la première extrémité 106 de la fibre optique 104 et à émettre de la lumière, en particulier en direction de cette première extrémité 106, la lumière émise présentant généralement une plage continue de longueurs d'onde. La fibre optique 104 est par exemple dopée avec des ions de terres rares, tels que de l'erbium (Er³⁺), du neodymium (Nd³⁺), de l'ytterbium (Yb³⁺), du thulium (Tm³⁺), ou bien du praseodymium (Pr³⁺).

La fibre optique 104 comporte en outre un réseau de Bragg 112 situé dans l'exemple décrit dans le tronçon dopé 110 et formé de variations de l'indice de réfraction du coeur le long de la fibre optique 104. Le réseau de Bragg 112 est destiné à filtrer la lumière émise par le tronçon dopé 110 pour n'en laisser passer qu'une partie présentant une longueur d'onde prédéterminée. Ainsi, lorsque la lumière reçue par l'extrémité 106 présente une longueur d'onde de 980 nm, la lumière émise par le tronçon dopé présente une plage de longueurs d'onde s'étendant autour de 1 050 nm, et la lumière sortant par cette extrémité 106 présente une longueur d'onde dans cette plage, comprise entre 1 000 et 1 100 nm suivant le pas du réseau de Bragg, par exemple 1 083 nm dans l'exemple décrit.

En variante, deux réseaux de Bragg situés de part et d'autre du tronçon dopé pourraient être utilisés à la place du réseau de Bragg 112.

Le laser 102 comporte en outre un support mécanique 114 auquel la fibre optique 104 est fixée en deux points de fixation 116, 118 situés de part et d'autre du tronçon dopé 110. En revanche, dans l'exemple décrit, la fibre optique 104 n'est pas fixée au support mécanique 114 entre les deux points de fixation 116, 118. Le point de fixation 116 situé du côté de l'extrémité 106 de la fibre optique 104 est appelé « point de fixation proximal », tandis que l'autre 118 est appelé « point de fixation distal ». Le support mécanique 114 maintient la fibre optique 104 tendue et en torsion entre les deux points de fixation 116, 118. Dans l'exemple décrit, les points de fixation 116, 118 sont distants d'au moins 6 cm.

Le support mécanique 114 est formé de plusieurs pièces fixées les unes aux autres, par exemple par collage. Ces pièces peuvent se dilater ensemble ou indépendamment les unes des autres suivant la température. Dans la suite, afin de simplifier la description, seuls les grands ensembles seront décrits, et non le détail des pièces fixées entre elles.

Ainsi, afin de fixer les points de fixation 116, 118, dans l'exemple décrit, le support mécanique 114 comporte une première partie 124 à laquelle le point de fixation proximal 116 est fixé, et une seconde partie 126 à laquelle le point de fixation distal 118 est fixé. Les parties 124, 126 du support mécanique 114 sont mobiles l'une par rapport à l'autre de manière à être écartées l'une de l'autre pour tendre ou détendre la fibre optique 104 entre les points de fixation 116, 118. Dans l'exemple décrit, les points de fixation 116, 118 sont collés au support mécanique 114 sur respectivement deux zones de collage 120, 122, qualifiées respectivement de proximale et distale.

La première partie 124 du support mécanique 114 est percée d'une ouverture 128.

La seconde partie 126 du support mécanique 114 comporte une gouttière 130 présentant une première extrémité 132 par laquelle la gouttière 130 est insérée dans l'ouverture 128, et une seconde extrémité 134 munie d'un épaulement 136. La fibre optique 104, et en particulier le tronçon dopé 110, s'étend dans la gouttière 130.

Le support mécanique 114 comporte en outre un dispositif d'écartement 138 destiné à définir l'écartement entre les première et seconde parties 124, 126 du support mécanique 114. Dans l'exemple décrit, le dispositif d'écartement 138 comporte une entretoise piézoélectrique 139 intercalée entre la première partie 124 du support mécanique 114 et l'épaulement 136 de la seconde partie 126 du support mécanique 114. Le dispositif d'écartement 138 est destiné à compenser les dilatations des pièces du laser 102 afin que le réseau de Bragg 112 garde un pas constant au cours du temps lorsque le laser 102 se trouve dans un milieu dans lequel la température est susceptible de varier dans le temps.

Le support mécanique 114 comporte en outre un matériau conducteur thermique 142 remplissant la gouttière 130 de manière à enrober la partie de la fibre optique 104 s'étendant dans la gouttière 130, et donc en particulier le tronçon dopé 110. Cela signifie que, dans la gouttière 130, la fibre optique 104 est noyée dans la masse du matériau conducteur thermique 142. Ainsi, toute la surface extérieure du tronçon dopé 110 est en contact direct avec le matériau conducteur thermique 142, ce qui facilite l'échange de chaleur depuis le tronçon dopé 110 vers le matériau conducteur thermique 142.

Pour favoriser encore l'échange de chaleur, le matériau conducteur thermique 142 présente de préférence une conductivité thermique d'au moins 0,1 W.m⁻¹.K⁻¹, par exemple d'au moins 0,2 W.m⁻¹.K⁻¹.

De préférence, le matériau conducteur thermique 142 est dépourvu de bulles d'air. En effet, la présence de bulles d'air freinerait et perturberait la dissipation thermique, laissant ainsi apparaitre un gradient de température qui se traduirait par un réseau de Bragg 112 inhomogène et donc une longueur d'onde potentiellement instable en sortie du laser 102.

De préférence, le matériau conducteur thermique 142 est mou, c'est-à-dire qu'il présente une dureté inférieure à 20 Shore A. De préférence également, le matériau conducteur thermique 142 est ductile, c'est-à-dire qui est apte à se déformer sans se rompre. Ainsi, en étant mou et ductile, le matériau conducteur thermique 142 permet au tronçon dopé 110 de se contracter et de s'étirer suivant l'environnement du laser 102.

De préférence également, le matériau conducteur thermique 142 est collant. Ainsi, le matériau conducteur thermique 142 reste plus facilement en place durant la durée de vie du laser 102.

Dans l'exemple décrit, le matériau conducteur thermique 142 a été polymérisé après avoir été introduit dans la gouttière 130.

De préférence, le matériau conducteur thermique 142 présente une viscosité avant polymérisation inférieure à 4 Pa.s, de préférence inférieure à 3 Pa.s. Ainsi, lorsqu'introduit dans la gouttière 130, le matériau conducteur thermique 142 est suffisamment fluide pour réduire le risque de formation de bulles d'air.

De préférence, le matériau conducteur thermique 142 est un gel silicone polymérisé, par exemple le gel vendu sous la référence CV-8151 par la société NuSil Silicone Technology. Ce gel peut être manipulé pendant 30 heures une fois sorti de son récipient d'origine, ce qui évite des contraintes de temps lors de la fabrication du laser 102.

Le laser 102 comporte en outre deux bouchons 144, 146 fermant la gouttière 130 de chaque côté afin de contenir le matériau conducteur thermique 142 dans la gouttière 130. Dans l'exemple décrit, les bouchons 144, 146 sont en graisse, par exemple de type MAPSIL210, ou en colle souple, par exemple de type colle silicone CV1-1142.

Le laser 102 comporte en outre une diode 148 destinée à émettre de la lumière. La lumière émise par la diode 148 présente une longueur d'onde principale, de 980 nm dans l'exemple décrit et puissance lumineuse, appelée puissance de pompe. Dans l'exemple décrit, la diode 148 est alimentée par une tension constante et un courant, appelé courant de pompe, contrôlé de manière à pouvoir prendre différentes valeurs. La puissance de pompe dépend du courant de pompe et il suffit de modifier ce dernier pour modifier la puissance de pompe.

Le laser 102 comporte en outre un multiplexeur optique 150 présentant tout d'abord une entrée destinée à recevoir la lumière émise par la diode 148. Le multiplexeur 150 présente en outre une entrée/sortie destinée à transmettre la lumière reçue en provenance de la diode 148 vers l'extrémité 106 de la fibre optique 104, et à recevoir la lumière sortant de l'extrémité 106 de la fibre optique 104. Dans l'exemple décrit, la lumière sortante présente une longueur d'onde de 1 083 nm. Ce décalage de longueur d'onde permet au multiplexeur optique 150 de séparer la lumière provenant de la fibre optique 104 de la lumière provenant de la diode 148. Le multiplexeur optique 150 présente en outre une sortie, différente de son entrée, destinée à transmettre la lumière reçue sur son entrée/sortie, c'est-à-dire en provenance de l'extrémité 106 de la fibre optique 104.

Le laser 102 comporte en outre un isolateur optique 152 présentant une entrée destinée à recevoir la lumière émise par la sortie du multiplexeur 150, et une sortie pour transmettre cette lumière vers une sortie 154 du laser 102. L'isolateur optique 152 a pour fonction de permettre la propagation de la lumière depuis son entrée vers sa sortie, mais d'empêcher la propagation de la lumière depuis sa sortie vers son entrée.

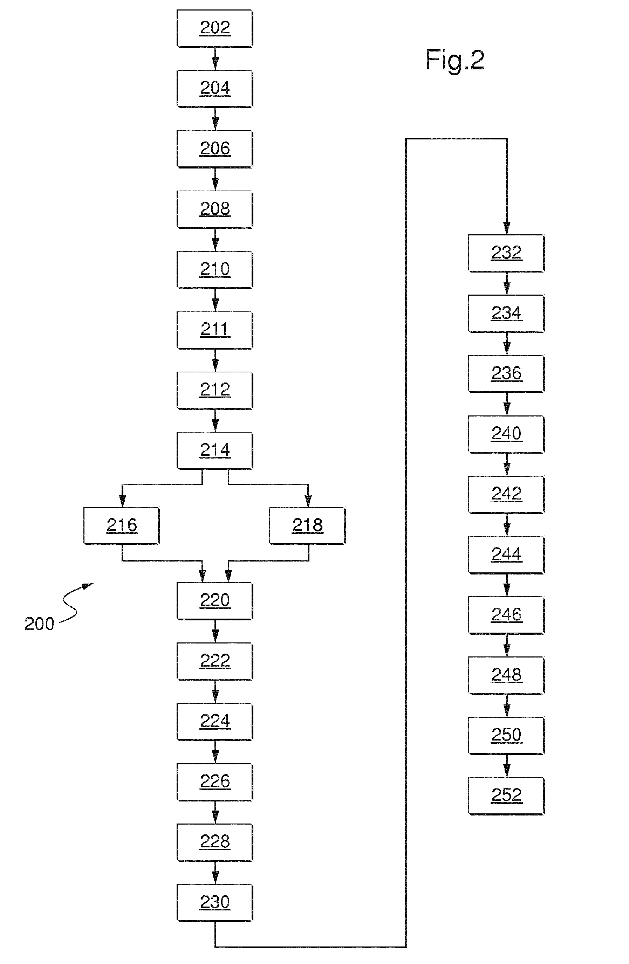

En référence à la figure 2, un procédé 200 de fabrication du laser 102 de la figure 1 va à présent être décrit.

Au cours d'une étape 202, le support mécanique 114 est soumis à au moins un cycle thermique, c'est-à-dire à une température variant entre une température basse prédéterminée, de préférence inférieure à 0°C, par exemple -20° C, et une température haute prédéterminée, de préférence supérieure à 30°C, par exemple 60°C. De préférence, la variation de température est réalisée en air sec, c'est-à-dire avec une humidité relative inférieure à 10%, de préférence inférieure à 5%. Cette étape permet de stabiliser le support mécanique 114, c'est-à-dire d'éviter que des pièces du support mécanique 114 ne se déplacent ultérieurement les unes par rapport aux autres. Un tel déplacement pourrait en effet être préjudiciable au bon fonctionnement du laser 102. À titre d'exemple, un déplacement aussi faible que 1 µm pourrait entraîner un décalage de la longueur d'onde du laser 102 d'une dizaine de picomètres.

Au cours d'une étape 204, la diode 148 est connectée à la fibre optique 104 de sorte que cette dernière puisse recevoir la lumière émise par la diode 148. Ainsi, dans l'exemple décrit, cela signifie que l'extrémité 106 de la fibre optique 104 est soudée à l'entrée/sortie du multiplexeur optique 150, et l'entrée de ce dernier est connectée à la sortie de la diode 148.

Au cours d'une étape 206, la fibre optique 104 est placée dans le support mécanique 114, en particulier de manière à ce que le tronçon dopé 110 soit situé dans la gouttière 130 et centré dans cette dernière. La fibre optique 104 n'est cependant pas fixée au support mécanique 114 à ce stade. Des mâchoires aimantées non représentées et situées de part et d'autre du tronçon dopé 110 de la fibre optique 104 sont alors refermées sur la fibre optique 104 pour maintenir cette dernière en position, en particulier dans la gouttière 130 du support mécanique 114. Les mâchoires aimantées sont ainsi situées de part et d'autre du tronçon dopé 110 de la fibre optique 104 et généralement séparées l'une de l'autre d'au moins 30 cm.

Au cours d'une étape 208, la diode 148 est allumée en lui fournissant du courant de pompe de manière qu'elle émette de la lumière qui arrive jusqu'à la fibre optique 104, le tronçon dopé 110 de cette dernière étant alors pompé jusqu'à obtenir une puissance nominale souhaitée en sortie du multiplexeur optique 150.

Au cours d'une étape 210, la fibre optique 104 est progressivement tendue en écartant les mâchoires aimantées l'une de l'autre jusqu'à obtenir une longueur d'onde souhaitée en sortie du multiplexeur optique 150.

Au cours d'une étape 211, le Rapport d'Extinction de Polarisation, de l'anglais « Polarization Extinction Ratio » ou PER, en sortie de l'extrémité 106 de la fibre optique 104 est évalué et comparé à une valeur prédéterminée, par exemple 15 dB. Dans l'exemple décrit, cette évaluation est réalisée en mesurant le PER en sortie du multiplexeur optique 150, car ce dernier ne change pas la polarisation du faisceau lumineux. Comme cela est connu en soi, le PER permet de quantifier le taux de polarisation du faisceau lumineux.

Si le PER est inférieur à la valeur prédéterminée, par exemple 15 dB, l'expérience montre que la probabilité de trouver un point de fonctionnement convenable et stable avec cette fibre optique est faible. Ainsi, il est de préférence retourné à l'étape 204 avec une autre fibre optique.

Au cours d'une étape 212, une torsion est progressivement appliquée à la fibre optique 104 entre les deux mâchoires aimantées 120, 122 selon un angle de torsion. De préférence, l'angle de torsion est maintenu en dessous de trois tours. En même temps, le PER en sortie de l'extrémité 106 de la fibre optique 104 est évalué, toujours en le mesurant à la sortie du multiplexeur optique 150.

Au cours d'une étape 214, l'angle de torsion entre les deux mâchoires aimantées offrant le meilleur PER, c'est-à-dire le plus élevé, est déterminé. Cet angle de torsion est appelé « angle de torsion optimal ».

Au cours d'une étape 216, la fibre optique 104 étant maintenue, grâce aux mâchoires aimantées, dans le support mécanique 114 tendue et tordue à l'angle de torsion optimal, il est vérifié que le PER reste supérieur à une valeur prédéterminée, par exemple 15 dB, sur un intervalle prédéterminé de la puissance de pompe, ce qui revient, dans l'exemple décrit à un intervalle prédéterminé du courant de pompe. À cet effet, le courant de pompe est contrôlé de manière à parcourir l'intervalle prédéterminé, tout en mesurant le PER en sortie de l'extrémité 106 de la fibre optique 104. De préférence, au cours de l'étape 216, l'intervalle prédéterminé du courant de pompe est parcouru par paliers, un palier étant défini dans l'exemple décrit comme une durée d'au moins 30 s, de préférence d'au moins 60 s, au cours de laquelle le courant de pompe est constant à un pourcent près autour d'une valeur moyenne. De préférence également, les paliers sont séparés les uns de autres d'au plus 10 mA, de préférence d'au plus 8 mA. De préférence encore, le passage d'un palier au suivant est réalisé à une vitesse d'au plus 10 mA.s⁻¹, et de préférence d'au plus 5 mA.s⁻¹.

Si le PER descend en dessous de 15 dB dans l'intervalle prédéterminé de courant de pompe, cela signifie que le faisceau émis par l'extrémité 106 de la fibre optique 104 n'est pas bien polarisé rectilignement et que, si la fibre optique 104 était gardée avec cet angle de torsion optimal, il y aurait un risque de saut de mode de polarisation pour le laser 102. C'est pourquoi, dans ce cas, il est retourné à l'étape 214, où l'angle de torsion donnant le meilleur PER suivant est sélectionné en tant qu'angle de torsion optimal. En variante, il est retourné à l'étape 202 avec une autre fibre optique.

Au cours d'une étape 218, parallèle à l'étape 216, il est vérifié que le faisceau laser de sortie est toujours monomode longitudinal, alors que la fibre optique 104 est tendue et en torsion. Un interféromètre de Fabry Pérot est par exemple utilisé pour réaliser cette vérification.

Au cours d'une étape 220, il est vérifié que le PER reste supérieur à la valeur prédéterminée sur l'intervalle prédéterminé du courant de pompe et que le faisceau laser de sortie reste monomode longitudinal pour plusieurs angles de torsion entre les deux mâchoires aimantées, appelés angles de torsion secondaires, appartenant à un intervalle angulaire prédéterminé défini à partir de l'angle de torsion optimal et comportant l'angle de torsion optimal. L'intervalle angulaire prédéterminé est par exemple ±90° autour de l'angle de torsion optimal. De préférence, les angles de torsion secondaires comprennent au moins les angles ±45° et/ou ±90° par rapport à l'angle de torsion optimal. À cet effet, les étapes 216 et 218 sont par exemple répétées pour chacun des seconds angles de torsion. Si la vérification est positive, cela signifie que l'angle de torsion optimal définit bien un point de fonctionnement stable de la fibre optique 104.

Au cours d'une étape 222, la fibre optique 104 est retirée du support mécanique 114 et les points de la fibre optique 104 qui étaient situés, avant son retrait, en face des zones de collage 120, 122 sont dénudés (retrait de l'enveloppe protectrice), afin de former les points de fixation 116, 118.

Au cours d'une étape 224, la fibre optique 104 est placée à nouveau dans le support mécanique 114 comme à l'étape 206, en plaçant les points de fixation 116, 118 contre respectivement les zones de collage 120, 122.

Au cours d'une étape 226, l'angle de torsion optimal est appliqué à la fibre optique 104. La fibre optique 104 est à nouveau maintenue dans cette position grâce aux mâchoires aimantées.

Au cours d'une étape 228, il est à nouveau vérifié que le PER reste supérieur à la valeur prédéterminée sur l'intervalle prédéterminé du courant de pompe et que le faisceau laser de sortie reste monomode longitudinal.

Au cours d'une étape 230, le point de fixation distal 118 est collé à la zone de collage distale. La colle est par exemple une colle époxy réticulant aux UV.

Au cours d'une étape 232, tout en maintenant l'angle de torsion optimal, la fibre optique 104 est tendue, comme à l'étape 210.

Au cours d'une étape 234, le point de fixation proximal 116 est collé à la zone de collage proximale 120.

Comme la colle est appliquée directement sur la gaine optique, il n'y a pas de risque de glissement avec l'enveloppe protectrice.

Au cours d'une étape 236, la colle est laissée au repos pendant le temps nécessaire à sa polymérisation et sa stabilisation.

Au cours d'une étape 240, les deux bouchons 144, 146 sont placés respectivement aux extrémités de la gouttière 130.

Lorsqu'il s'agit de graisse, les deux bouchons 144, 146 sont de préférence observés sous différents angles à l'aide, éventuellement, d'une binoculaire, pour voir s'ils seront étanches au gel (très peu visqueux). Lorsqu'il s'agit de graisse, les bouchons 144, 146 sont de préférence un peu tassés.

Au cours d'une étape 242, la partie de la fibre optique 104 s'étendant dans la gouttière 130, entre les deux bouchons 144, 146, et donc en particulier le tronçon dopé 110, est enrobée de matériau conducteur thermique 142 en remplissant la gouttière 130 de matériau conducteur thermique 142. L'étape 242 est réalisée de manière à éviter au maximum la formation de bulles d'air dans le matériau conducteur thermique 142.

Dans l'exemple décrit, l'étape 242 comporte les étapes suivantes.

Au cours d'une étape 242-1, le support mécanique 114 est incliné d'un côté d'un des bouchons 144, 146. Par exemple, l'inclinaison est comprise entre 5° et 10° par rapport à l'horizontale. Par exemple également, l'inclinaison est obtenue à l'aide d'une cale.

Au cours d'une étape 242-2, un peu de matériau conducteur thermique 142 est placé dans un petit récipient, de façon à pouvoir venir en récupérer des gouttes avec une petite aiguille.

Au cours d'une étape 242-3, le matériau conducteur thermique 142 est déposé délicatement, à l'aide de la petite aiguille, goutte par goutte, depuis le petit récipient, dans la gouttière 130 jusqu'à ce le matériau conducteur thermique atteigne le bouchon situé en bas.

Au cours d'une étape 242-4, le support mécanique 114 est placé à plat, de manière que la fibre optique 104 s'étende à l'horizontale. Le placement à plat est par exemple réalisé à l'aide d'un niveau à bulle.

Au cours d'une étape 242-5, des gouttes de matériau conducteur thermique sont injectées dans la gouttière 130 jusqu'à remplir cette dernière, en particulier jusqu'à ce que le matériau conducteur atteigne l'autre bouchon (celui situé en haut lorsque la gouttière 130 était inclinée).

Pour réaliser l'étape 242, il est préférable de travailler dans une ambiance propre, de type salle blanche, avec une charlotte et des gants. Les outils nécessaires à l'application du gel, tels que la seringue, l'aiguille pour déposer les gouttes de gel, les petits récipients... sont de préférence préalablement nettoyés avec du papier d'essuyage non pelucheux imbibé d'alcool, par exemple isopropylique.

Au cours d'une étape 244, le matériau conducteur thermique 142 se stabilise dans la gouttière 130 en laissant le support mécanique à plat pendant une durée prédéterminée d'au moins 1 heure.

Au cours d'une étape 246, lorsque la durée prédéterminée est passée, il est vérifié que la fibre optique 104 est bien baignée dans le matériau conducteur thermique et que ce dernier n'a pas coulé quelque part. Si nécessaire, quelques gouttes de matériau conducteur thermique sont ajoutées.

Au cours d'une étape 248, tandis que le support mécanique 114 est toujours à plat, le matériau conducteur thermique 142 est polymérisé. La polymérisation est réalisée, suivant le type de matériau conducteur thermique 142, sous étuve ou bien sous ultra-violet ou bien suivant la méthode de polymérisation adaptée.

Au cours d'une étape 250, il est vérifié que le matériau conducteur thermique 142 est convenablement polymérisé. Par exemple, la vérification est réalisée à l'aide d'un pot témoin ayant subi la même procédure de polymérisation. Il est également vérifié que le matériau conducteur thermique 142 est présent partout sur les pourtours de la fibre optique 104 dans la gouttière 130.

Au cours d'une étape 252, différents tests de fonctionnement du laser 102 sont réalisés. Ces tests comportent par exemple l'un ou plusieurs des tests suivants : vérification que la puissance en sortie du laser 102 varie en fonction du courant de pompe suivant un gabarit prédéterminé, vérification que la longueur d'onde en sortie du laser 102 varie en fonction du courant de pompe suivant un gabarit prédéterminé, vérification que le PER varie en fonction du courant de pompe suivant un gabarit prédéterminé, vérification de la stabilité de puissance en sortie du laser 102 pendant une durée prédéterminée d'au moins 1 heure.

Il apparaît clairement qu'un laser à fibre optique tel que celui décrit précédemment permet de dissiper la chaleur produite dans la fibre optique, vers l'extérieur de cette dernière. Ainsi, un pas constant du réseau de Bragg peut être obtenu le long de la fibre optique, ce qui améliore les performances spectrales et d'intensité du laser.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Procédé de fabrication d'un laser à fibre optique (102) comportant :
- une fibre optique (104) présentant :
• deux extrémités (106, 108) dont une première (106) par laquelle de la lumière est destinée à être reçue, et
• un tronçon dopé (110) destiné à absorber au moins une partie de la lumière reçue par la première extrémité (106) et à émettre de la lumière,
le procédé étant **caractérisé en ce qu'il** comporte :
- l'application d'un angle de torsion à la fibre optique (104),
- la fourniture de lumière présentant une puissance appelée puissance de pompe à la première extrémité (106) de la fibre optique (104),
- la vérification que le Rapport d'Extinction de Polarisation de la lumière sortant de la première extrémité (106) de la fibre optique (104) reste supérieur à une valeur prédéterminée sur tout un intervalle prédéterminé de la puissance de pompe, et
- si le Rapport d'Extinction de Polarisation reste supérieur à la valeur prédéterminée sur tout l'intervalle prédéterminé de la puissance de pompe, la fixation de la fibre optique (104) à un support mécanique (114) en deux points de fixation (116, 118) de la fibre optique (104) situés de part et d'autre du tronçon dopé (110), avec l'angle de torsion appliqué à la fibre optique (104).

2. Procédé selon la revendication 1, dans lequel l'intervalle prédéterminé de la puissance de pompe est parcouru par paliers.

3. Procédé selon la revendication 1 ou 2, dans lequel la lumière est fournie à la première extrémité (106) de la fibre optique (104) par une diode (148),

4. Procédé selon la revendication 3, dans lequel la diode (148) est alimentée en courant électrique, appelé courant de pompe, et dans lequel l'intervalle prédéterminé de la puissance de pompe est parcouru par paliers en faisant parcourir par paliers un intervalle prédéterminé au courant de pompe, les paliers étant séparés les uns des autres d'au plus 10 mA, de préférence d'au plus 8 mA.

5. Procédé selon la revendication 4, dans lequel le passage d'un palier au suivant est réalisé à une vitesse d'au plus 10 mA/s, et de préférence d'au plus 5 mA/s.

6. Procédé selon l'une quelconque des revendications 1 à 5, dans lequel l'angle de torsion est celui pour lequel le Rapport d'Extinction de Polarisation est le plus élevé.

7. Procédé selon l'une quelconque des revendications 1 à 6, comportant en outre, pour chacun de plusieurs angles de torsion, appelés angles de torsion secondaires, appartenant à un intervalle angulaire prédéterminé défini à partir de l'angle de torsion et comportant l'angle de torsion :
- l'application de l'angle de torsion secondaire à la fibre optique (104), et
- la vérification que le Rapport d'Extinction de Polarisation reste supérieur à la valeur prédéterminée sur l'intervalle prédéterminé de la puissance de pompe.

8. Procédé selon la revendication 7, dans lequel l'intervalle angulaire prédéterminé est de ±90° autour de l'angle de torsbn.

9. Procédé selon l'une quelconque des revendications 1 à 8, dans lequel, le support mécanique (114) comportant une gouttière (130) dans laquelle s'étend le tronçon dopé (110) de la fibre optique (104) une fois fixée, la fixation de la fibre optique (104) au support mécanique (114) est suivie d'un enrobage du tronçon dopé (110) par un matériau conducteur thermique (142), cet enrobage étant réalisé en remplissant la gouttière (130) de matériau conducteur thermique (142).

10. Procédé selon la revendication 9, dans lequel le remplissage de la gouttière (130) de matériau conducteur thermique (142) est réalisé goutte à goutte de manière à éviter la formation de bulles d'air.

## Patentansprüche

1. Herstellungsverfahren eines Lasers mit Lichtleitfasern (102), umfassend:
- eine Lichtleitfaser (104), aufweisend:
- zwei Enden (106, 108), darunter ein erstes (106) Ende, durch das Licht aufgenommen werden soll, und
- einen dotierten Abschnitt (110), der ausgelegt ist, um mindestens einen Teil des Lichts zu absorbieren, das vom ersten Ende (106) empfangen wird, und das Licht zu emittieren,
wobei das Verfahren **dadurch gekennzeichnet ist, dass** es Folgendes umfasst:
- die Anwendung eines Torsionswinkels auf die Lichtleitfaser (104),
- die Leitung des Lichts, das eine Leistung, genannt Pumpleistung, aufweist, an das erste Ende (106) der Lichtleitfaser (104),
- die Sicherstellung, dass das Polarisationsauslöschungsverhältnis des Lichts, das das erste Ende (106) der Lichtleitfaser (104) verlässt, höher als ein vorbestimmter Wert auf einem gesamten vorbestimmten Intervall der Pumpleistung ist, und
- wenn das Polarisationsauslöschungsverhältnis höher als der vorbestimmte Wert im gesamten vorbestimmten Intervall der Pumpleistung bleibt, die Befestigung der Lichtleitfaser (104) auf einem mechanischen Träger (114) an zwei Befestigungspunkten (116, 118) der Lichtleitfaser (104), die sich auf beiden Seiten des dotierten Abschnitts (110) befinden, wobei der Torsionswinkel auf die Lichtleitfaser (104) angewendet wird.

2. Verfahren nach Anspruch 1, wobei das vorbestimmte Intervall der Pumpleistung durch Stufen durchzogen ist.

3. Verfahren nach Anspruch 1 oder 2, wobei das Licht an das erste Ende (106) der Lichtleitfaser (104) durch eine Diode (148) geliefert wird.

4. Verfahren nach Anspruch 3, wobei die Diode (148) mit elektrischem Strom, genannt Pumpstrom, versorgt wird, und wobei das vorbestimmte Intervall der Pumpleistung von Stufen durchzogen wird, indem ein vorbestimmtes Intervall für den Pumpstrom von Stufen durchziehen gelassen wird, wobei die Stufen voneinander um nicht mehr als 10 mA, vorzugsweise nicht mehr als 8 mA, getrennt sind.

5. Verfahren nach Anspruch 4, wobei der Übergang von einer Stufe zur nächsten mit einer Geschwindigkeit von nicht mehr als 10 mA/s und vorzugsweise nicht mehr als 5 mA/s erfolgt.

6. Verfahren nach einem der Ansprüche 1 bis 5, wobei der Torsionswinkel derjenige ist, für den das Polarisationsauslöschungsverhältnis das höchste ist.

7. Verfahren nach einem der Ansprüche 1 bis 6, umfassend außerdem für jeden von mehreren Torsionswinkeln, genannt sekundäre Torsionswinkel, der Teil eines vorbestimmten Winkelintervalls ist, das ausgehend vom Torsionswinkel definiert wird und den Torsionswinkel umfasst:
- die Anwendung des sekundären Torsionswinkels auf die Lichtleitfaser (104), und
- die Sicherstellung, dass das Polarisationsauslöschungsverhältnis auf dem vorbestimmten Intervall höher als der vorbestimmte Wert der Pumpleistung bleibt.

8. Verfahren nach Anspruch 7, wobei das vorbestimmte Winkelintervall ±90° um den Torsionswinkel beträgt.

9. Verfahren nach einem der Ansprüche 1 bis 8, wobei, da der mechanische Träger (114) eine Traufe (130) umfasst, in der sich der dotierte Abschnitt (110) der Lichtleitfaser (104) erstreckt, nachdem sie befestigt ist, die Befestigung der Lichtleitfaser (104) an den mechanischen Träger (114) von einer Beschichtung des dotierten Abschnitts (110) durch ein thermisch leitfähiges Material (142) gefolgt wird, wobei diese Beschichtung durch die Füllung der Traufe (130) mit einem thermisch leitfähigen Material (142) erfolgt.

10. Verfahren nach Anspruch 9, wobei die Füllung der Traufe (130) mit thermisch leitfähigem Material (142) Tropfen für Tropfen erfolgt, um die Bildung von Luftblasen zu vermeiden.

## Claims

1. Method for manufacturing an optical fibre laser (102) comprising:
- an optical fibre (104) having:
• two ends (106, 108) of which a first (106) whereby the light is to be received, and
• a doped section (110) for absorbing at least one portion of the light received via the first end (106) and emitting light,
the method being **characterised in that** it comprises:
- applying a torsion angle to the optical fibre (104),
- supplying light having a power referred to as the pump power at the first end (106) of the optical fibre (104),
- checking that the Polarisation Extinction Ratio of the light output from the first end (106) of the optical fibre (104) remains greater than a predetermined value throughout a predetermined range of the pump power, and
- if the Polarisation Extinction Ratio remains greater than the predetermined value throughout the predetermined range of the pump power, attaching the optical fibre (104) to a mechanical mount (114) at two attachment points (116, 118) of the optical fibre (104) situated on either side of the doped section (110), with the torsion angle applied to the optical fibre (104).

2. Method according to claim 1, wherein the predetermined range of the pump power is covered by stages.

3. Method according to claim 1 or 2, wherein the light is supplied at the first end (106) of the optical fibre (104) by a diode (148),

4. Method according to claim 3, wherein the diode (148) is supplied with electricity, referred to the as the pump current, and wherein the predetermined range of the pump power is covered by stages, by having the pump current covering in stages a predetermined range, the stages being separated from each other by not more than 10 mA, preferably by not more than 8 mA.

5. Method according to claim 4, wherein the changeover from one stage to the next is carried out at a rate of not more than 10 mA/s, and preferably not more than 5 mA/s.

6. Method according to any of claims 1 to 5, wherein the torsion angle is that for which the Polarisation Extinction Ratio is the highest.

7. Method according to any of claims 1 to 6, further comprising, for each of a plurality of torsion angles, referred to as secondary torsion angles, within a predetermined angular range defined on the basis of the torsion angle and comprising the torsion angle:
- applying the secondary torsion angle to the optical fibre (104), and
- checking that the Polarisation Extinction Ratio remains greater than the predetermined value over the predetermined range of the pump power.

8. Method according to claim 7, wherein the predetermined angular range is ±90° relative to the torsion angle.

9. Method according to any of claims 1 to 8, wherein, since the mechanical mount (114) comprises a gutter (130) into which the doped section (110) of the optical fibre (104) runs once said optical fibre is attached, attaching the optical fibre (104) to the mechanical mount (114) is followed by coating the doped section (110) with a heat-conducting material (142), wherein said coating is carried out by filling the gutter (130) with heat-conducting material (142).

10. Method according to claim 9, wherein filling the gutter (130) with heat-conducting material (142) is carried out drop by drop so as to minimise air bubble formation.
